# EUROPEAN PATENT APPLICATION

(11) **EP 3 357 725 A1**
(43) Date of publication of application: **08.08.2018**
(21) Application number: 17474002.7
(22) Date of filing: 18.09.2017
(51) Int. Cl.: B60H 1/00

(54) **A METHOD OF AIR QUALITY MONITORING IN MOTOR VEHICLES AND IN THE SURROUNDINGS AND DEVICE FOR MONITORING**

(30) Priority: 20.09.2016 SK 842016
(71) Applicant: Labas, Miroslav, 040 01 Kosice (SK)
(72) Inventor: Labas, Miroslav, 040 01 Kosice (SK)
(74) Representative: Vasil, Martin

(57) **Abstract**

It describes a method for air quality monitoring in the motor vehicle and outdoor air, surrounding the motor vehicle and device for such monitoring, enabling automatic regulation of air supply from the external environment to the motor vehicle interior depending on air quality in the motor vehicle and air quality in the external environment.

## Description

### Name of invention

A method of air quality monitoring in motor vehicles and in the surroundings and device for monitoring

### Field of technology

In general, this invention relates to the method or indoor air quality monitoring in motor vehicles of various types and outdoor air quality monitoring in the surroundings of such motor vehicles and enables automatic control and regulation of air supply from the external environment to the vehicle interior in case of lower outdoor air quality and vice versa, i.e. supply of air from the external environment to the motor vehicle in case of lower quality of air in the motor vehicle.

### Background of the invention

Currently, motor vehicles are not equipped with the system enabling the monitoring of indoor and outdoor air quality and the regulation of air supply to the motor vehicle depending on air quality in the motor vehicle and air quality in the external environment, surrounding such a motor vehicle.

### Summary of the invention

The invention "A method of air quality monitoring in motor vehicles and in the surroundings and device for monitoring" enables supply of high quality air from an external environment to the motor vehicle and prevention of low quality air supply from an external environment to the motor vehicle.

The main benefit of this invention is prevention of penetration of harmful air from the external environment to the motor vehicle and provision of air supply from the external environment to the motor vehicle in case of low air quality in the motor vehicle and/or in case of sufficient air quality in the external environment. The additional benefit is possibility of installation of this invention in any type of the vehicle.

It is suitable to use an existing device for air quality monitoring enabling-as quickly as possible air quality monitoring and distinguishing as much as possible harmful particles contained in the air.

### Examples of invention implementation

The invention "A method of air quality monitoring in the motor vehicles and in the surroundings and device for monitoring " can be used in any type of motor vehicle for control of the air quality in the motor vehicle and in the external environment, surrounding the motor vehicle. Next, after air quality in the internal and external environment is evaluated, automatic regulation of air supply ensures that a high quality air in the external environment is supplied to the motor vehicle and/or a low quality air supply from the external environment to the motor vehicle is automatically prevented.

## Claims

1. A method for control of air quality in a motor vehicle and outdoor air in the external environment, surrounding the motor vehicle.

2. Device enabling a check of air quality in the motor vehicle and check of outdoor air in the external environment, **characterized by** a function of automatic regulation of air supply from the external environment to the motor vehicle interior depending on air quality in the motor vehicle and air quality in the external environment.
